# FASCICULE DE BREVET EUROPEEN

(11) **EP 2 223 490 B1**
(45) Date de publication et mention de la délivrance du brevet: **27.03.2013**
(21) Numéro de dépôt: 08855120.5
(22) Date de dépôt: 28.11.2008
(51) Int. Cl.: H04L 29/06, H04L 29/08

(54) **PROCÉDÉ ET SYSTÈME DE ROUTAGE DE FLUX DE DONNÉES DANS UN RÉSEAU IP PAR INONDATION D'UN MESSAGE DE RECHERCHE D'ABONNÉ**
VERFAHREN UND SYSTEM ZUM ROUTEN VON DATENSTRÖMEN IN EINEM IP-NETZWERK DURCH ÜBERFLUTEN EINER TEILNEHMERSUCHNACHRICHT
METHOD AND SYSTEM FOR ROUTING DATA STREAMS IN AN IP NETWORK BY FLOODING OF A SUBSCRIBER SEARCH MESSAGE

(30) Priorité: 30.11.2007 FR 0708394
(43) Date de publication de la demande: 01.09.2010
(73) Titulaire: THALES, 92200 Neuilly-sur-Seine (FR)
(72) Inventeur: POMBET, Philippe, F-92150 Suresnes (FR); AUZOU, Nicolas, F-92210 Saint-cloud (FR); WAGNER, Siméon, F-93100 Montreuil (FR)
(74) Mandataire: Dudouit, Isabelle
(86) Numéro de dépôt international: PCT/EP2008/066440
(87) Numéro de publication internationale: WO 2009/068650

(56) Documents cités:
- EP-A- 1 564 938
- EP-A- 1 727 317
- FURONG WANG ET AL: "The extended TRIP supporting VoIP routing reservation with distributed QoS" PROCEEDINGS OF THE SPIE, SPIE, BELLINGHAM, VA, vol. 5282, 4 novembre 2003 (2003-11-04), pages 1015-1024, XP002414054 ISSN: 0277-786X

## Description

L'invention concerne un procédé de routage de flux de données dans un réseau IP comportant au préalable une étape de diffusion d'appel dans le réseau par inondation d'un message de recherche d'abonné.

Afin de répondre aux besoins exprimés par un usager ou une application pour transmettre des flux de données dans un réseau de communication comprenant des noeuds de routage et des artères, il existe actuellement différentes solutions qui permettent notamment de trouver, pour les flux usagers, le meilleur chemin à emprunter en fonction, notamment :
o de la distance, nombre de bonds à parcourir,
o du type d'artères à emprunter, en évitant les liens satellites, par exemple.

Ces solutions peuvent traiter aussi des problèmes de réservation de ressources (bande passante) nécessaires sur chaque artère du chemin choisi pour acheminer la communication et si besoin, pour préempter une communication de plus faible priorité.

Les solutions, connues par le Demandeur, utilisent par exemple :
o Les protocoles de routage de type tels que : le protocole de routage dynamique « OSPF » pour Open Shortest Path First, le protocole d'échange de route « BGP » pour Border Gateway Protocol, protocole proactif de routage « OLSR » abréviation anglo-saxonne de « Optimized Link State Routing Protocol », pour atteindre le destinataire au plus court,
o Les protocoles de réservation de ressources, par exemple de type RSVP pour « Resource Reservation Protocol ».

En revanche, peu de solutions de l'art antérieur proposent simultanément :
o Un routage qui prend en compte la qualité de service QoS demandée par une application et l'état d'occupation des artères,
o La préemption de communication de priorité plus faible en cas de saturation des artères.

Certaines solutions connues du Demandeur sont construites autour du protocole MPLS correspondant à l'acronyme anglo-saxon « Multi Protocol Label Switching » ou encore par une association des protocoles OLSR, RSVP précités et de marquage de la route par routage politique. Il existe aussi des procédés tel que celui décrit dans la demande de brevet du Demandeur FR 07 02346.

Si ces techniques sont efficaces, elles présentent toutefois certains inconvénients. Pour la technique MPLS, cette technologie ne considère que des flux agrégés de même type depuis les sites d'accès, ce qui rend impossible le routage QoS appel par appel et la préemption de ressources communication par communication.

Pour les solutions mettant en oeuvre des techniques OLSR, RSVP, si ces solutions apportent globalement le service recherché, avec quelques réserves sur la préemption qui est faite alors que l'appelé n'a pas encore répondu ou qui peut être déclenchée alors qu'une autre route existe, ses inconvénients majeurs se situent au niveau de sa réalisation :
o L'agent OSA pour QoS agent héberge son propre protocole de routage et son propre protocole de signalisation, sans tirer parti du protocole de routage mis en oeuvre par les routeurs standards du réseau,
o Ce protocole de routage est issu d'un développement spécifique, donc non standard.

Dans le cas du procédé exposé dans la demande de brevet FR 07 02346, la solution requiert une implémentation du service de routage décrit dans le RFC 4915 (disponible sur le lien Internet http://www.ietf.org/rfc/rfc4915.txt) par le routeur, ce qui n'est pas le cas pour beaucoup de routeurs du commerce, et une adaptation du protocole RSVP pour s'adapter au routage multi-topologique.

D'autre part, dans les solutions existantes précitées, subsiste le problème du temps de convergence des tables de routage du réseau. Dans certains cas d'applications, par exemple dans un monde tactique, c'est-à-dire pour des réseaux dont la topologie peut être très fluctuante dans le temps, certaines communications pourront échouer pendant cette phase de convergence.

De plus, ces solutions utilisent toutes, le protocole standard de réservation RSVP en parallèle de la signalisation d'appel. Dans la plupart des cas, l'appelé reçoit l'appel avant que la session RSVP ne soit complètement établie. Chaque direction déterminée pour transmettre un flux de données étant négociée séparément, les chemins peuvent être différents entre l'aller et le retour, ce qui complexifie les traitements à faire en cas de rupture de l'un de ces chemins.

Le document de Furong Wang et al intitulé « the extended TRIP supporting VoIP routing reservation with distributed QoS « Proceedings of the SPIE, SPIE, BELLINGHAM, VA, vol 5282, 4 novembre 2003 (2003-11-04), pages 1015-1024, XP 002414054 ISSN: 0277-786X divulgue un procédé de modification du routage des données à l'aide de serveur de localisatoin attachés aux routeurs, le calcul se faisant de manière centrale à l'aide de protocoles de routage classiques pour les réseaux filaires.

Dans la suite de la description, les abréviations suivantes seront utilisées pour simplifier la description :
OSA : désigne une application chargée de trouver le meilleur chemin en fonction d'une qualité de service demandée QoS, cette application vient se superposer au protocole habituellement utilisé par un routeur. Elle est réalisée par un protocole propriétaire basé sur une inondation du réseau WAS.
OSP : correspond à une passerelle dont la fonction est de convertir une signalisation d'appel d'une communication en une signalisation de recherche de meilleur chemin dans un réseau comprenant plusieurs noeuds,
LOC : fonction de localisation des abonnés,
LCC : fonction serveur d'appel ou en anglo-saxon « Local call control ».
Mr : **M**essage **r**echerche abonné
Mret : **M**essage **ret**our

L'objet de la présente invention concerne un procédé pour déterminer le meilleur chemin emprunté par un flux de données au sein d'un réseau de communication comportant plusieurs noeuds constitués d'un routeur associé à une application, communiquant entre eux par des artères, une passerelle d'entrée et une passerelle de sortie assurant la conversion du protocole multimédia en protocole de routage dans le réseau caractérisé en ce qu'il comporte au moins les étapes suivantes :
○ recevoir une demande d'établissement d'appel d'un abonné A cherchant à joindre un abonné B,
○ localiser l'appelé B au niveau d'un serveur d'appel et identifier la passerelle de sortie à atteindre sur le réseau,
○ convertir la localisation d'appel de ladite demande en signalisation de recherche de meilleur chemin en introduisant la qualité de service requise par la communication dans un message de recherche abonné Mr,
○ inonder la totalité des noeuds du réseau en diffusant le message de recherche abonné Mr émis par la passerelle d'entrée vers lesdits noeuds jusqu'à la passerelle de sortie,
○ au niveau de chacun des noeuds et sur réception du message de recherche abonné Mr, déterminer pour chaque noeud, le coût de l'artère par laquelle est arrivé le message de recherche abonné, réserver la ressource demandée et lancer une temporisation d'attente τi proportionnelle au coût de l'artère, avant de retransmettre le message de recherche abonné sur les autres artères adjacentes audit noeud excepté l'artère par laquelle le message Mr est arrivé,
o sur la réception du premier message de recherche abonné Mr sur la passerelle de sortie, émettre un message de retour Mr et parcourant le chemin inverse à celui par lequel est arrivé le premier message de recherche, c'est-à-dire le chemin optimal P déterminé par les mécanismes de temporisation exécuté au niveau de chacun des noeuds du réseau.

Selon un mode de réalisation, si un noeud reçoit par une artère un message de recherche abonné déjà traité, alors, il ignore ledit message.
Sur réception du message de retour Mret, au niveau de la passerelle d'entrée, alors la communication est, par exemple, établie en transmettant à la passerelle de sortie les paramètres d'appel.
La confirmation d'établissement de la communication entre l'appelant A et l'appelé B est transmise à travers le réseau et sur réception de cette confirmation, chacun des noeuds effectue une préemption et pour chaque sens de circulation d'un message exécute une commande de politique de routage pour imposer au routeur un port de sortie.
Les données peuvent être des communications multimédia.

L'invention concerne aussi un système permettant de déterminer le meilleur chemin à emprunter par un flux de données au sein d'un réseau de communication comportant plusieurs noeuds communiquant entre eux par des artères, et constituant un réseau de communication caractérisé en ce qu'il comporte au moins les éléments suivants :
o au niveau de chaque routeur du réseau une application QSAi exécutant les étapes du procédé décrit ci-avant et effectuant la localisation de la passerelle de sortie, le calcul du coût de routage, le lancement d'une temporisation proportionnelle au coût calculé précédemment, l'établissement de la route entre l'appelant et l'appelé, la préemption de ressources et la configuration du routeur par imposition du port de sortie pour cette communication,
o une desserte d'entrée et une desserte de sortie, reliée chacune à un routeur du réseau, chacune des dessertes comportant une application QSP assurant la conversion du protocole multimédia en protocole de routage dans le réseau et un serveur d'appel et de localisation permettant d'orienter les appels multimédia vers le QSP.

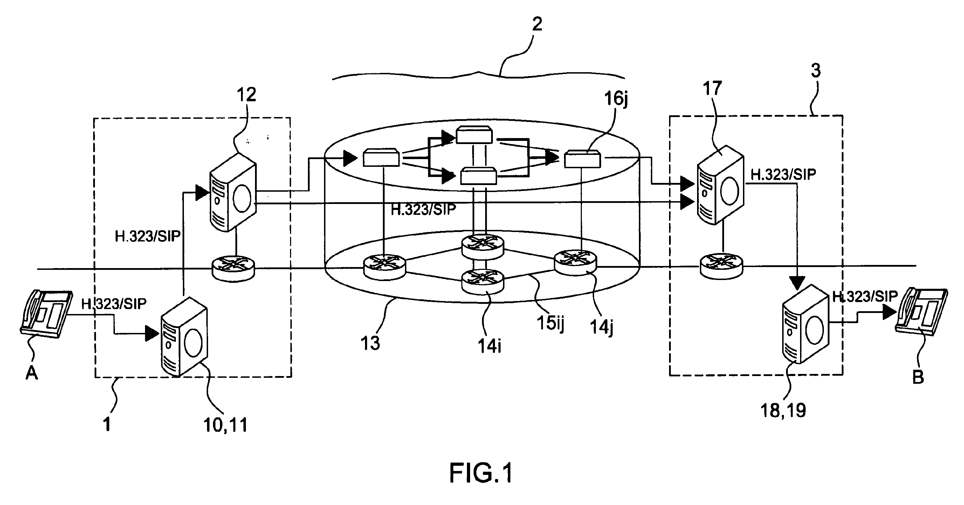

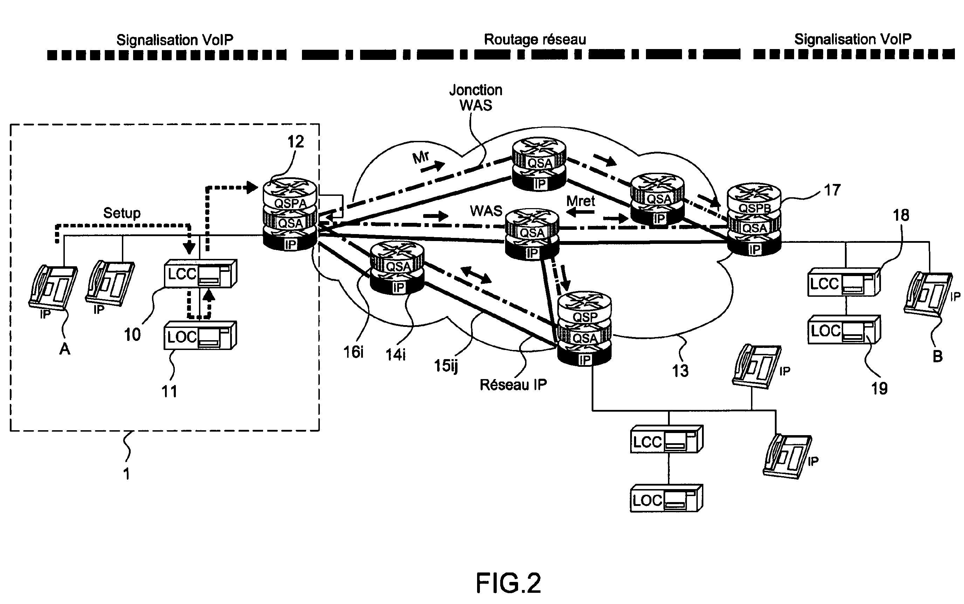

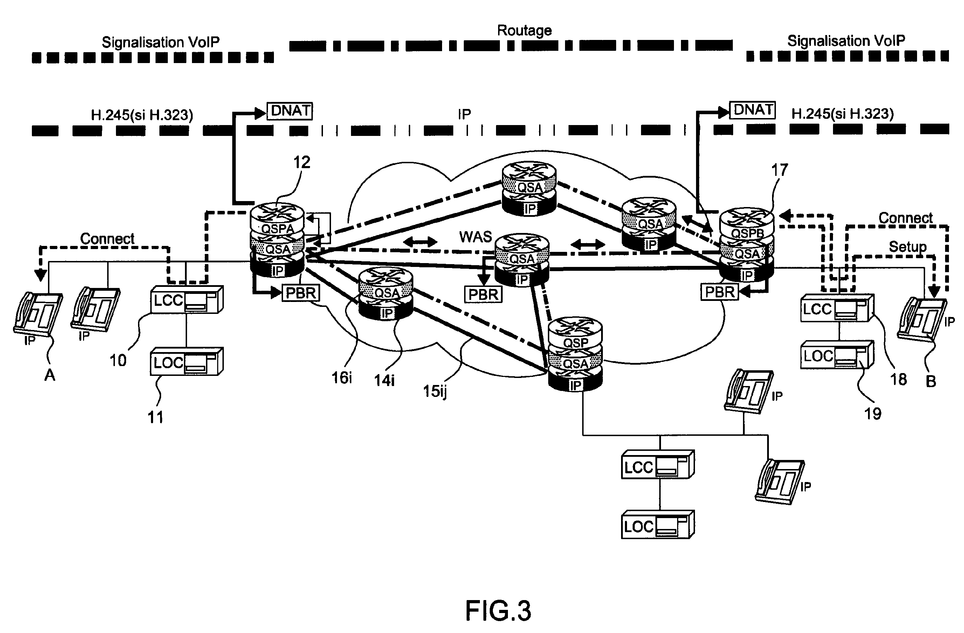

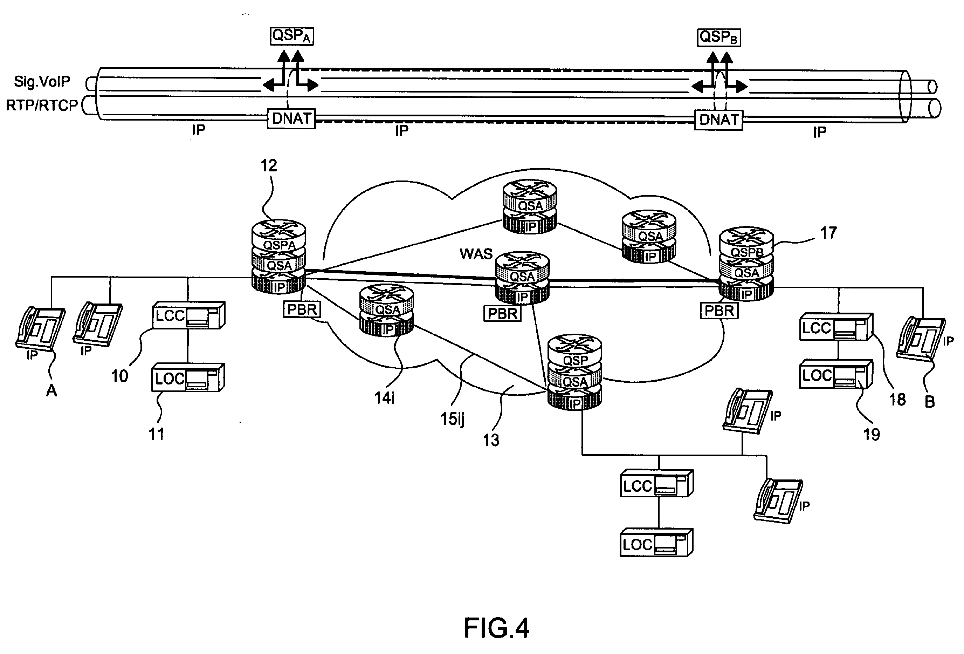

D'autres caractéristiques et avantages de la présente invention apparaîtront mieux à la lecture de la description qui suit d'un exemple de réalisation donné à titre illustratif, nullement limitatif, annexé des figures qui représentent :
o la figure 1, un exemple d'architecture générale d'un système selon l'invention,
o la figure 2, la phase de recherche d'un abonné,
o la figure 3, la phase d'établissement de la communication, et
o la figure 4, la communication une fois établie.

Afin de mieux faire comprendre le principe mis en oeuvre dans l'invention, la description qui suit est donnée à titre illustratif et nullement limitatif dans le cadre d'un appel multimédia au travers d'un réseau étendu tactique IP plus généralement connu sous l'acronyme anglo-saxon « WAS IP » pour Wide Area System IP (Internet Protocol). L'invention peut aussi être utilisée dans des systèmes de type WAN (Wide Area Network) désignant des réseaux étendus.
Le procédé selon l'invention peut toutefois s'appliquer dans tout réseau supportant le protocole IP (réseau tactique ou réseaux radio haut débit). Elle s'applique notamment pour des services Multimédia qui demandent une réservation de ressources.
**La** **figure 1** **représente un exemple de structure** permettant la mise en oeuvre du procédé selon l'invention, comprenant par exemple une première desserte 1, comprenant des moyens permettant l'établissement d'un appel d'un abonné A cherchant à joindre un abonné B, par exemple. Cette desserte comprend un serveur d'appel 10 ou LCC pour Local Control Call, un serveur de localisation 11 ou LOC, ces deux serveurs ayant pour fonction d'orienter les appels multimédia vers une passerelle 12 appelée plus communément QoS Proxy-QSP qui permet notamment de convertir une signalisation d'appel d'une communication de l'abonné A en signalisation de recherche de meilleur chemin.
Il est possible d'utiliser tous les protocoles connus par l'Homme du métier sous la désignation H.323, par exemple.
Le système comprend une deuxième partie 2, reliée à la passerelle 12 et chargée de mettre en oeuvre un procédé de routage par inondation explicité plus loin dans la description. Cette deuxième partie comprend un réseau IP 13 composé de plusieurs noeuds 14i reliés et communiquant entre eux par des artères 15ij, ce réseau servant au transport des données. Le réseau 13 supporte, par exemple, un protocole de routage IP. Sur ce réseau se positionne le procédé de routage par inondation selon l'invention représenté par les applications 16i qui sont associées chacune à un routeur 14i. Le procédé de routage par inondation se positionne ainsi au-dessus du routage WAS IP.
Une troisième partie 3 permet la réception de l'appel de l'abonné A et la connexion de l'abonné B (établissement d'une communication entre A et B). Une passerelle 17 est reliée au réseau 13, la passerelle 17 a une fonction similaire à la passerelle 12. Cette passerelle 17 est en liaison avec un serveur d'appel 18 ou LCC pour Local Control Call, un serveur de localisation 19 ou LOC, ces deux serveurs ayant pour fonction d'orienter les appels multimédia.
Le système étant symétrique, la passerelle d'entrée 12 pourra aussi jouer le rôle de passerelle de sortie, alors que la passerelle de sortie 17, celle d'entrée.
Dans l'exemple donné, la signalisation voix sur IP désignée par l'abréviation VoIP va être véhiculée avec la signalisation associée au routage WAS.
Au niveau de chacun des routeurs 14i du réseau de transit 13, est ajoutée une application OSAi ayant pour fonction de trouver le meilleur chemin dans le réseau en fonction, notamment de la qualité de service QoS requise par l'application, et de l'état d'occupation des artères et d'activer des commandes de routage politique ou PBR abréviation anglo-saxonne de Policy Based Routing, pour imposer le meilleur chemin trouvé au routeur associé, par rapport à celui qui aurait été obtenu par les protocoles de routage classique.
Les routeurs 14i peuvent être des routeurs de type COTS (composants sur étagère commercialisés) et peuvent mettre en oeuvre des protocoles de routage IGP (Interior Gateway Protocol). Au-dessus de ce protocole, l'application OSAi est mise en oeuvre au niveau de chacun des routeurs ou noeuds du réseau, afin de déterminer la localisation d'un point de sortie du WAS, le coût de routage, l'établissement de la route offrant le meilleur coût, la préemption de ressources et d'assurer la configuration du routeur.

Le procédé selon l'invention décrit en relation avec les figures 2, 3 et 4 comprend les étapes suivantes :
**La** **figure 2** **schématise la phase de recherche d'un abonné.**
L'établissement d'un appel multimédia au travers d'un WAS IP entre les deux dessertes 1 et 2 est effectué suivant le processus ci-dessous :
Lorsqu'un appel (Setup) arrive au serveur d'appel 10 de la desserte 1, celui-ci s'adresse au serveur de localisation 11 pour obtenir la localisation de l'appelé B (et le prochain bond à effectuer pour l'atteindre) et identifier la passerelle de sortie à atteindre. Dans le cas d'un service multimédia, la fonction LOC donne les coordonnées : du serveur LCC 18 (serveur sur lequel est inscrit l'appelé B) à atteindre et, si un réseau de type WAS doit être traversé, des deux passerelles d'accès à ce WAS. Sur l'exemple de la figure 2, le serveur LCC à atteindre est le serveur 18 et les passerelles sont les passerelles 12 et 17, respectivement pour que l'appelant A puisse atteindre l'appelé B.
Le setup (modifié) est alors prolongé au QSP local (sur la figure le QSPA correspondant à l'abonné A) qui lance la diffusion (par inondation) de la recherche abonné vers les QSAi du réseau WAS ou réseau étendu 13, en précisant le débit et la priorité de la communication. Les paramètres débit et priorité sont introduits dans le message de recherche abonné à partir des données fournies dans le setup.

Le message de setup précise également le type de service demandé (vidéo, audio, ...). Le setup est conservé en attente dans la desserte 1.
La recherche abonné ou le message recherche abonné est diffusé ainsi de proche en proche dans tout le réseau 13 WAS. Les différentes applications OSAI qui pilotent chacune les routeurs 14i du réseau 13, recherchent le meilleur chemin et ceci jusqu'à atteindre la passerelle de sortie 17 (et jusqu'aux QSP).
Pour cela, sur réception du message de recherche Mr, chaque OSAi calcule le coût de l'artère 15ij par laquelle est arrivé le message. Ce coût prend en compte :
- l'état d'occupation des artères empruntées en terme de débit et de nombre de communications,
- le nombre de préemptions éventuellement à pratiquer,
- le media utilisé pour pénaliser les artères à forte latence, gigue ou taux d'erreur, éventuellement le niveau de sécurisation de l'artère.
Ensuite, chaque OSAi lance une temporisation d'attente τi proportionnelle au coût déterminé pour l'artère 15e, artère par laquelle est arrivé le message, avant de retransmettre le message de recherche d'abonné Mr sur toutes les autres artères adjacentes, excepté l'artère 15e par laquelle est arrivé le message de recherche d'abonné. Si la OSAi reçoit par une autre artère, un message de recherche déjà traité, elle ne traite plus ce message de recherche.
Sur réception du message de recherche, une OSAi va faire une réservation de ressources en fonction du débit inscrit dans le message de recherche abonné.
Sur la première réception à la passerelle de sortie 17 du message de recherche abonné, un message de retour Mret émis par la fonction QSP de la desserte de l'appelé B parcourt en sens inverse le chemin optimal P trouvé par le mécanisme des temporisations successives τi mises en oeuvre au sein des OSAi du réseau. Chacun des noeuds 16i connaît les artères d'entrée 15e du message de recherche abonné premier arrivé. Les réceptions suivantes des messages de recherche provenant d'autres noeuds du réseau sont ignorées par la passerelle 17.
A l'issue de cette deuxième phase, le chemin optimal P est déterminé et la phase d'établissement de la communication peut être engagée.
**La** **figure 3** **représente la phase d'établissement de la communication.**
Une fois l'abonné B trouvé, la transmission du message de A vers B s'effectue de la manière suivante :
o au niveau du QSP_{A} appelant, donc la passerelle 12, sur réception du message retour Mret, l'établissement de la communication (transportant également le message d'appel initial afin que le QSP_{B} appelé 17 pour l'abonné B puisse régénérer l'appel dans sa desserte 3) est émise sur le chemin optimal P trouvé,
o le QSP_{B} appelé 17 récupère le message d'appel et le transmet au serveur d'appel LCC 18 de sa desserte 3,
o au décroché de l'appelé B, une confirmation d'établissement d'appel est véhiculée dans le WAS, confirmation qui est transportée par les différentes applications 16i,
o sur réception de la confirmation d'appel, chaque application QSAi traversée effectue éventuellement une préemption (si des communications moins prioritaires doivent être libérées pour récupérer des ressources pour la communication en cours), puis, pour chaque sens de transmission, chaque application OSAi exécute une commande de routage politique (PBR) pour imposer au routeur local 14i un port de sortie 20k pour un couple (IP_{QSP}, Port RTP/RTCP) donné. Les applications QSA et QSP paramètrent les routeurs 14i, afin que le flux media suive un chemin qui ne correspond pas forcément à celui défini par le protocole de routage du routeur. Une application OSAI va ainsi déterminer les commutations au sein du routeur vers des artères de sortie désignées pour acheminer le trafic correspondant aux adresses IP et ports des deux QSP.
o la confirmation d'établissement est traduite en message « Connect » du protocole voix sur IP « VoIP » utilisé par le QSP de l'appelant A.

Dans les deux dessertes 1 et 2, à la fin des négociations relatives aux ports logiques et aux CODECs (codeur décodeur), des commandes DNAT sont émises par les QSP pour que les routeurs d'accès remplacent à la volée les adresses IP des terminaux par celles des QSP pour les flux media (RTP/RTCP). Ainsi, il n'est pas nécessaire d'attendre la négociation des adresses/ports entre terminaux pour établir le chemin dans le réseau de transit.
Sur la figure 4 a été représentée le chemin emprunté par les messages, une fois la communication établie.
Les commandes DNAT et PBR effectuées sur les routeurs permettent que les flux média ne transitent pas par les serveurs QSP et QSA garantissant ainsi des performances optimales. Le chemin du plan média est indiqué à la figure 4.
Physiquement, une application OSAi est installée, par exemple :
o soit dans un équipement spécifique connecté au routeur 14i par un lien Ethernet (ou Série),
o soit, si les routeurs le permettent (Linux, CISCO), intégrée au routeur en tant qu'application complémentaire.

Le procédé selon l'invention offre notamment les avantages suivants :
o il gère les ressources de manière symétrique appel par appel,
o il effectue les préemptions quand l'appelé a répondu et s'il n'y a vraiment pas d'autre chemin possible. D'autre part, le procédé s'appuie sur n'importe quel routage IGP utilisé dans le réseau de transit,
o il ne dépend pas de fonctionnalités de routage non encore industrialisées par les constructeurs de routeurs,
o il est implémenté au-dessus du protocole IP, permettant ainsi de faire varier les coûts des artères au moment des établissements et des libérations des communications sans impacter les noeuds de routage non concernés par la communication en cours.

Il présente comme avantage de pouvoir être utilisé dans tous les réseaux présentant une forte mobilité topologique et des artères à faible débit, par exemple pour des réseaux tactiques sur IP, des réseaux radio haut débit, etc...

## Revendications

1. Procédé pour déterminer le meilleur chemin emprunté par un flux de données au sein d'un réseau de communication comportant plusieurs noeuds constitués d'un routeur (14i) associé à une application (16i), communiquant entre eux par des artères (15ij), une passerelle d'entrée (12) et une passerelle de sortie (17) assurant la conversion du protocole multimédia en protocole de routage dans le réseau (13) **caractérisé en ce qu'**il comporte au moins les étapes suivantes :
o recevoir une demande d'établissement d'appel d'un abonné A cherchant à joindre un abonné B,
o localiser l'appelé B au niveau d'un serveur d'appel (10, 11) et identifier la passerelle de sortie à atteindre sur le réseau,
o convertir la localisation d'appel de ladite demande en signalisation de recherche de meilleur chemin en introduisant la qualité de service requise par la communication dans un message de recherche abonné Mr,
o inonder la totalité des noeuds (14i+16i) du réseau (13) en diffusant le message de recherche abonné Mr émis par la passerelle d'entrée (12) vers lesdits noeuds (14i+16i) jusqu'à la passerelle de sortie (17),
o au niveau de chacun des noeuds (14i+16i) et sur réception du message de recherche abonné Mr, déterminer pour chaque noeud (14i+16i), le coût de l'artère (15ij) par laquelle est arrivé le message de recherche abonné, réserver la ressource demandée et lancer une temporisation d'attente τi proportionnelle au coût de l'artère, avant de retransmettre le message de recherche abonné sur les autres artères adjacentes audit noeud excepté l'artère (15e) par laquelle le message Mr est arrivé,
o sur la réception du premier message de recherche abonné Mr sur la passerelle de sortie (17), émettre un message de retour Mr et parcourant le chemin inverse à celui par lequel est arrivé le premier message de recherche, c'est-à-dire le chemin optimal P déterminé par les mécanismes de temporisation exécuté au niveau de chacun des noeuds du réseau,

2. Procédé selon la revendication 1, **caractérisé en ce qu'**il comporte au moins l'étape suivante, si un noeud reçoit par une artère un message de recherche abonné déjà traité, alors, il ignore ledit message.

3. Procédé selon la revendication 1, **caractérisé en ce que** sur réception du message de retour Mret, au niveau de la passerelle d'entrée (12), alors la communication est établie en transmettant à la passerelle de sortie (17) les paramètres d'appel.

4. Procédé selon la revendication 2, **caractérisé en ce que** la confirmation d'établissement de la communication entre l'appelant A et l'appelé B est transmise à travers le réseau (13) et **en ce que** sur réception de cette confirmation, chacun des noeuds effectue une préemption et pour chaque sens de circulation d'un message exécute une commande de politique de routage pour imposer au routeur un port de sortie.

5. Procédé selon l'une des revendications 1 à 4, **caractérisé en ce que** les données sont des communications multimédia.

6. Système permettant de déterminer le meilleur chemin à emprunter par un flux de données au sein d'un réseau de communication comportant plusieurs noeuds (14i+16i) communiquant entre eux par des artères (15ij), et constituant un réseau (13) de communication **caractérisé en ce qu'**il comporte au moins les éléments suivants :
o au niveau de chaque routeur (14i) du réseau (13) une application OSAi exécutant les étapes du procédé selon l'une des revendications 1 à 5 et effectuant, la localisation de la passerelle de sortie (17), le calcul du coût de routage, le lancement d'une temporisation proportionnelle au coût calculé précédemment, l'établissement de la route entre l'appelant et l'appelé, la préemption de ressources et la configuration du routeur par imposition du port de sortie pour cette communication,
o une desserte d'entrée et une desserte de sortie, reliée chacune à un routeur du réseau (13), chacune des dessertes comportant une application QSP assurant la conversion du protocole multimédia en protocole de routage dans le réseau (13) et un serveur d'appel et de localisation permettant d'orienter les appels multimédia vers le QSP.

## Claims

1. A method for determining the best path followed by a data stream within a
communication network comprising a plurality of nodes constituted by a router (14i) associated with an application (16i), communicating together via arteries (15ij), an input gateway (12) and an output gateway (17) the multimedia into a routing protocol in the network (13), **characterized in that** it comprises at the following steps:
o receiving a request to establish a call from a subscriber A to contact a subscriber B;
o locating called party B within a call server (10, 11) and identifying the output gateway to be reached on the network;
o conversing the call location of said request into better path search signalling by introducing the quality of service that is required by the communication in a subscriber search message Mr;
o flooding all of the nodes (14i+16i) of the network (13) by broadcasting the subscriber search message Mr transmitted by the input gateway (12) to said nodes (14i+16i) up to the output gateway (17);
o determining, on each of said nodes (14i+16i) and on receipt of the subscriber search message Mr, for each node (14i+16i) the cost of the artery (15ij) through which the subscriber search message arrived, reserving the requested resource and launching a wait timer τi that is proportional to the cost of the artery before retransmitting the subscriber search message on the other arteries are adjacent to said node, for the artery (15e) through which the message Mr arrived;
o transmitting, on receipt of the first subscriber search message Mr on the output gateway (17), a return message Mr and covering the path opposite to that through which the first search message arrived, namely, the optimum path P determined by the timer mechanisms executed on each of the nodes of the network.

2. The method according to claim 1, **characterized in that** it comprises at least the following step: ignoring an already processed subscriber search message if a node receives said message via an artery.

3. The method according to claim 1, **characterized in that** when the return message Mret is received at the input gateway (12) the communication is established by transmitting the call parameters to the output gateway (17).

4. The method according to claim 2, **characterized in that** the confirmation of the establishment of communication between the caller A and the called party B is transmitted through the network (13), and **in that** on receipt of this confirmation each of the nodes anticipates and, for each direction of flow of a message, executes a routing polity command to impose an output port on the router.

5. The method according to any one of claims 1 to 4, **characterized in that** the data is multimedia communications.

6. A system for determining the best path to be followed by a data stream within a communication network comprising a plurality of nodes (14i+16i) communicating with each other via arteries (15ij) and constituting a communication network (13), **characterized in that** it comprises at least the following elements:
o a QSAi application at each router (14i) of the network (13), executing the steps of the method according to any one of claims 1 to 5 and locating the output gateway (17), calculating the routing cost, launching a timer that is proportional to the previously calculated cost, establishing the route between the caller and the called party, anticipating resources and configuring the router by imposing the output port for this communication;
o an input service and an output service each connected to a router of the network (13), each of the services comprising a QSP application converting the multimedia protocol into a routing protocol in the network (13) and a call and location server allowing the multimedia calls to be oriented toward the ASP.

## Patentansprüche

1. Verfahren zum Ermitteln des besten von einem Datenstrom genommenen Pfades in einem Kommunikationsnetz, das mehrere Knoten beinhaltet, die von einem mit einer Anwendung (16i) assoziierten Router (14i) gebildet werden, die über Hauptstrecken (15ij) miteinander kommunizieren, wobei ein Eingangs-Gateway (12) und ein Ausgangs-Gateway (17) die Umwandlung des Multimedia-Protokolls in ein Routing-Protokoll in dem Netzwerk (13) besorgen, **dadurch gekennzeichnet, dass** es wenigstens die folgenden Schritte beinhaltet:
o Empfangen einer Anforderung zum Aufbauen eines Anrufs von einem Teilnehmer A, der Kontakt mit einem Teilnehmer B wünscht;
o Suchen des Angerufenen B in einem Anrufserver (10, 11) und Identifizieren des auf dem Netzwerk zu erreichenden Ausgangs-Gateway;
o Umwandeln des Ruforts der Anforderung in eine Signalisierung zum Suchen eines besseren Pfads durch Eingeben der für die Kommunikation benötigte Dienstequalität in eine Teilnehmersuchnachricht Mr;
o Fluten aller Knoten (14i+16i) des Netzwerks (13) durch Broadcasten der vom Eingangs-Gateway (12) gesendeten Teilnehmersuchnachricht Mr zu den Knoten (14i+16i) bis zum Ausgangs-Gateway (17);
o Ermitteln, auf jedem der Knoten (14i+16i) und nach dem Empfang der Teilnehmersuchnachricht Mr, der Kosten der Hauptstrecke (15ij) für jeden Knoten (14i+16i), über die die Teilnehmersuchnachricht angekommen ist, Reservieren der angeforderten Ressource und Starten einer Wartezeit τi proportional zu den Kosten der Hauptstrecke vor dem Neusenden der Teilnehmersuchnachricht auf den anderen Hauptstrecken, die sich neben diesem Knoten befinden, mit Ausnahme der Hauptstrecke (15e), über die die Nachricht Mr angekommen ist;
o Senden, nach dem Empfang der ersten Teilnehmersuchnachricht Mr auf dem Ausgangs-Gateway (17), einer Rücknachricht Mr, die über den Pfad entgegengesetzt zu dem läuft, über den die erste Suchnachricht angekommen ist, d.h. den optimalen Pfad P, der von den Zeitmechanismen ermittelt wurde, die auf jedem der Knoten des Netzwerks durchgeführt wurden.

2. Verfahren nach anspruch 1, **dadurch gekennzeichnet, dass** es, wenn ein Knoten eine bereits verarbeitete Teilnehmersuchnachricht über eine Hauptstrecke empfängt, wenigstens den Schritt des Ignorierens dieser Nachricht beinhaltet.

3. Verfahren nach anspruch 1, **dadurch gekennzeichnet**, die Kommunikation, die Rücknachricht Mret am Eingangs-Gateway (12) empfanden wird, durch Senden der Rufparameter zum Ausgangs-Gateway (17) aufgebaut wird.

4. Verfahren nach anspruch 2, **dadurch gekennzeichnet, dass** die Bestätigung des Aufbaus von Kommunikation zwischen Anrufer A und Angerufenem B durch das Netzwerk (13) gesendet wird, und dadurch, dass nach dem Empfang dieser Bestätigung jeder der Knoten eine Vorhersage durchführt und für jede Fließrichtung einer Nachricht einen Routing₋Richtlinienbefehl ausführt, um dem Router einen Ausgangsport zuzuweisen.

5. Verfahren nach einem der Ansprüche 1 bis 4, **dadurch gekennzeichnet, dass** die Daten Multimedia-Kommunikationen sind.

6. System zum Ermitteln des besten von einem Datenstrom in einem Konununikationsnetz zu nehmenden Pfades, der mehrere Knoten (14i+16i) umfasst, die über Hauptstrecken (15ij) miteinander kommunizieren und ein Kommununikationsnetz (13) bilden, **dadurch gekennzeichnet, dass** es wenigstens die folgenden Elemente umfasst:
o eine QSAi-Anwendung an jedem Router (14i) des Netzwerks (13), die das Verfahren nach einem der Ansprüche 1 bis 5 ausführt und den Ausgangs-Gateway (17) sucht, die Routing-Kosten berechnet, eine Verweilzeit proportional zu den zuvor berechneten Kosten startet, die Route zwischen Anrufer und Angerufenem aufbaut, Ressourcen vorhersagt und den Router konfiguriert, indem sie ihm den Ausgangsport für diese Kommunikation zuweist;
o einen Eingangsdienst und einen Ausgangsdienst, die jeweils mit einem Router des Netzwerks (13) verbunden sind, wobei jeder der Dienste eine QSP-Anwendung beinhaltet, die das Multimedia-Protokoll in ein Routing-Protokoll in dem Netzwerk (13) umwandelt, und einen Ruf- und Ortsserver, der die Orientierung der Multimedia-Anrufe zum QSP zulässt.
